# EUROPÄISCHE PATENTSCHRIFT

(11) **EP 0 574 569 B1**
(45) Veröffentlichungstag und Bekanntmachung des Hinweises auf die Patenterteilung: **19.03.1997**
(21) Anmeldenummer: 93901882.6
(22) Anmeldetag: 23.12.1992
(51) Int. Cl.: A23C 19/05

(54) **VERFAHREN ZUR KÄSEBEREITUNG MIT STANDARDISIERUNG**
PROCESS FOR THE STANDARDISED PREPARATION OF CHEESE
PROCEDE DE PREPARATION STANDARDISEE DE FROMAGE

(30) Priorität: 02.01.1992 HU 792
(43) Veröffentlichungstag der Anmeldung: 22.12.1993
(73) Patentinhaber: VISZLAI, Béla, H-3800 Szikszo (HU)
(72) Erfinder: VISZLAI, Béla, H-3800 Szikszo (HU)
(74) Vertreter: Viering, Jentschura & Partner
(86) Internationale Anmeldenummer: HU9200062
(87) Internationale Veröffentlichungsnummer: WO9312663

(56) Entgegenhaltungen:
- WO-A-90/00353
- AT-B- 219 958
- AT-B- 362 220
- GB-A- 504 092
- Roempp Chemie Lexikon, Volume 3, issued 1990 by Georgy Thieme Verlag
- (Stuttgart, New York), Seite 1845, insbesonders "Homogenisation".

## Beschreibung

Die Erfindung betrifft ein Verfahren nach dem Oberbegriff des Patentanspruchs 1.

Aus der Sicht der menschlichen Ernährung sind die Milchprodukte eine Art der bedeutendsten Lebensmittel, darunter hat der Verbrauch von Käse eine entscheidende Bedeutung. Die Käseproduktion nähert sich der Jahresmenge von 15 Millionen Tonnen an.

Die dynamische Entwicklung ist eine Welterscheinung, im Hintergrund steht die Verbrauchsaufnahme, wonach die Käse billig sind, und dabei eine Diätwirkung haben, eine reiche Quelle an Eiweiß und Kalzium bilden, und einen relativ niedrigen Energiegehalt aufweisen.

Die Herstellungstechnologie der einzelnen Käsearten, der Weich-, Edelschimmel-, Halbhart-, Hartkäse sowie die der Sauermilch-Käse (Quarkarten) hat sich im letzten Jahrhundert im großen Maße geändert, in erster Linie als Folge der technischen Entwicklung und der Möglichkeiten der Mikrobiologie.

Der Trockensubstanzgehalt einer durchschnittlichen Kuhmilch beträgt 12,5 %, während der Wassergehalt bis 87,5 % der Milch beträgt. Aus diesem Trockensubstanzgehalt von 12,5 % kann nahezu 50 % dieses für den Käse nach den verschiedenen Verfahren gewonnen werden, bis der Anteil von 6,0-6,5 % der übriggebliebenen Trockensubstanz in die Molke, das Nebenprodukt der Käseproduktion kommt.

Der Wassergehalt der Molke beträgt 93,5 - 94,0 %, aber sie ist wegen ihres hohen Anteils wertvoller Substanzen geeignet zur weiteren Verarbeitung. Die Verarbeitung ist aber wegen des hohen Wassergehaltes kostspielig, und deswegen hat sich die Verarbeitung in einigen Ländern nicht verbreitet, im letzteren Fall wird die Molke zur Fütterung gebraucht, und ein bedeutender Anteil, 30 - 40 % fließt in die Abwasserkanäle ab. Nach dem Abfließen in die Kanäle schädigen die Zerfallprodukte die Umwelt.

Die in der Käsebereitung entstandene Molke enthält 0,5 - 1,6 % Eiweiß, diese Menge erreicht, 1/3 des Gesamteiweißgehaltes der Milch und abhängig von der Kategorie beträgt der Fettgehalt auch 0,4 - 1,6 % Fett. Die Abtrennung des Fettes aus der Molke ist mit Zentrifugieren gelöst, aber die Neuanwendung des Molkenrahms ist schon problematischer. Zum Herausziehen der in der Molke verbleibenden Eiweisse für das Hauptprodukt wurde bisher kein Verfahren ausgearbeitet. Das Herausziehen dieser aus der Molke ist kostspielig und als Ergebnis entstehen Sekundärprodukte (Molkenpulver, Molkenkäse usw.).

Nach dem Stand der Technik sind die Käsezubereitungstechnologien mehr oder weniger gleich. Der Ausgangsgrundstoff aller Technologien ist die. Vollmilch, die in roher oder pasteurisierter Form verarbeitet wird. (Tejipari kézikönyv/Handbuch der Milchindustrie), Mezõgazdasági Kiadó, Budapest, 1981. pp. 428-522).

Im Bezug auf die Sauermilch-Käse (Quark) ist die Teilhomogenisierung bekannt, sie ist aber in der Praxis wegen der niedrigen Ertragsverbesserung nicht verbreitet.

Experimente werden zur Erhöhung des Ertrages der Sahne mit Niederdruckbehandlung geführt. Das hat eine Bedeutung vor allem auf dem Gebiet der Quarkproduktion.

Die durchschnittliche, von der konventionellen Herstellung abweichende Lösung ist die Anwendung von Ultrafiltern.

Diese Lösung richtet sich auf das Herausziehen des vollständigen inneren Gehaltes, wodurch sie nur auf einem engeren Gebiet verwendet werden, praktisch nur zur Erweiterung des Angebotes.

Aus der AT-PS 362,220 ist es bekannt, Ultraschall beim Homogenisieren und Entkeimen von flüssigen Lebensmitteln anzuwenden. Weiter ist aus der GB 504,092 ein Verfahren zum Herstellen von Käse bekannt, gemäß welchem der Milch Sahne entzogen wird, diese Sahne unter Druck homogenisiert wird, und danach in der geeigneten Menge der Magermilch zugesetzt wird.

Der Erfindung liegt die Aufgabe zugrunde, das Verfahren der eingangs erwähnten Art so zu verbessern, daß der Feststoffanteil in der Molke erniedrigt wird und so der Ertrag an Käse bei gegebener Milchmenge vergrößert wird.

Dies wird gemäß der Erfindung durch die Merkmale im kennzeichnenden Teil des Anspruchs 1 erreicht. Vorteilhafte Weiterbildungen sind in den abhängigen Ansprüchen beschrieben.

Dabei wird die Ertragsvergrößerung durch eine bessere Eiweißausbeute erreicht und gleichzeitig wird ein geringerer Eiweißgehalt in der Molke erreicht, wodurch diese weniger umweltschädlich ist.

Die Basis der Erfindung ist die Erkenntnis, daß die Abtrennung der Milchfette, dann die Zerteilung des Milchfettes ohne Aufreißung der Hülle, dann die Wiedervereinigung mit der Milch bedeutend die Ausscheidung der Milcheiweiße, deren Hineinkommen ins Hauptprodukt (Käse) erhöht.

Die weiteren Einzelheiten der Erfindung werden mit Hilfe eines Ausführungsbeispiels vorgestellt.

Die zur Käsebereitung bestimmte Kuhmilch wird gesondert in Milchspeichern gelagert. Dadurch wird die Egalisierung gesichert.

Die zur Käsebereitung vorbereitete Milch wurde durch Wärmeaustauscher auf 50 Grad Celsius erwärmt, dann in der Entrahmmaschine zur fettfreien Milch und Sahne mit einem Fettgehalt von 28 t% getrennt.

Die entrahmte Milch wird auf 74 Grad Celsius pasteurisiert und auf 6 Grad Celsius rückgekühlt gelagert. Die Sahne wird auf einer Temperatur von 45 Grad Celsius mit der Ultraschallmaschine behandelt, dann auf 95 Grad Celsius pasteurisiert. Danach wird sie auf 6 Grad Celsius rückgekühlt 10 Stunden lang gelagert. Nach der Lagerung wird der Fettgehalt der Wannenmilch - aus der entrahmten Milch und der Sahne - auf 3,6 t% eingestellt, nach einer Vorerwärmung auf 35 Grad Celsius 1,5 % Kultur (Schimmelpilzkultur) und Labmittel zugegeben, dann stehen/gelassen.

Das entstandene Gerinnsel wird mit der bekannten Methode zerkleinert, dann mit Filtereinrichtung die Molke entfernt (bis der Tropfenanfall völlig aufhört).

Als Ergebnis der Zubereitung konnte man beobachten, daß sich kein Sahne im Falle der behandelten Sahne auf dem Gerinnsel herausbildete (auf dem Gerinnsel gab es keine Fettausscheidung), die Gerinnungszeit war kürzer, die abgetropfene Molke war gleichmäßig und rein.

Im Falle der als Kontrolle angewendeten konventionellen Technologie waren eine starke Sahnebildung auf dem Gerinnsel (Fettausscheidung), die langsame Gerinnung, und die ungleichmäßige, trübe Molke zu beobachten.

Die Mehrproduktion von Käse betrug 20,21 % auch nach dem Ernährungszeitraum.

### Der Eiweißgehalt der Molke:

| | |
|---|---|
| - im Falle der konventionellen Technologie: | 1,165 %, |
| - beim Verfahren nach der Erfindung: | 0,661 %. |

### Mikroskopisches Bild:

Im Falle des Verfahrens nach der Erfindung:
   die Fettkugeln sind winzig, feinverteilt.
Im Falle der Kontroll-(konventionellen) Technologie:
   Fettkugeln von verschiedenen Größen, ungleichmäßige Verteilung, teilweise Gerinnung und Deformation.

### Reifeprozeß:

Beim Verfahren nach der Erfindung:
   - normale Hefenbildung;
   - gleichhmäßiges weißes Schimmelpilz-Gewächs;
   - die Sinnesorganbeurteilung ist gut.

### Bei der konventionellen Technologie:

- starke Hefenbildung:
- starke Fremdschimmelpilz-Infiziertheit;
- Sinnesorganbeurteilung: ungleichmäßig.

Man kann feststellen, daS die Erfindung im solchen Maße zur Erhöhung der Eiweißausbeutung geeignet ist, wofür es kein Beispiel in der Milchindustrie bis jetzt gab. Die Ausbeutungserhöhung zieht gleichzeitig auch eine Qualitätsverbesserung nach sich. Die Technologie nach der Erfindung bewirkt keine bedeutende Kostenerhöhung (auch der Investitionskosten).

## Patentansprüche

1. Verfahren zur Käsebereitung mit Standardisierung, indem die Milch entrahmt, die abgetrennte Sahne behandelt, dann der Fettgehalt der Wannenmilch mit Hilfe der behandelten Sahne eingestellt wird und diese kalt gereift wird, danach kulturiert wird, Zusatzstoffe zugegeben werden, gegebenenfalls gelabt, dann mit der bekannten Methode eingelabt, zerkleinert, erhitzt wird sowie die Abtrennung der Molke, die Formung, Pressung, und Einsalzung durchgeführt werden, dann gereift wird, dadurch gekennzeichnet, daß die Fettkugeln durch Behandlung der Sahne auf einen Durchmesser von 0,6 - 1,3 µm verkleinert werden, wobei die Behandlung mit Ultraschall oder in einer Kugelmühle oder in einer Gegenströmung im Venturirohr oder Zerstäuber und ohne Aufreißung der Fettkugelhüllen durchgeführt wird.

2. Verfahren nach Anspruch 1, dadurch gekennzeichnet, daß die Sahne mit Ultraschall von 10 000 - 50 000 Hz behandelt wird.

3. Verfahren nach Anspruch 1 oder 2, dadurch gekennzeichnet, daß die Sahne mit Ultraschall höchstens 300 Sekunden lang behandelt wird.

4. Verfahren nach einem der Ansprüche 1 bis 3, dadurch gekennzeichnet, daß die entrahmte Milch pasteurisiert wird.

5. Verfahren nach einem der Ansprüche 1 bis 4, dadurch gekennzeichnet, daß die Käsemilch 4-10 Stunden lang kalt gereift wird.

6. Verfahren nach Anspruch 5, dadurch gekennzeichnet, daß die Käsemilch 10 Stunden bei 6 °C gereift wird.

7. Verfahren nach Anspruch 5 oder 6, dadurch gekennzeichnet, daß die gereifte Milch und Sahne vor der Kulturierung auf eine Temperatur zwischen 28-40 °C erwärmt wird.

## Claims

1. Method for making cheese with standardisation, in that the milk is skimmed, the separated cream is treated, the fat content of the vat milk is then adjusted by means of the treated cream and this milk is matured in a cold state and subsequently cultured, additives are added, possibly rennet, the milk is then fermented with rennet by the known method, broken up and heated, the whey is separated, moulding, pressing and salting are carried out, then maturing, characterised in that the fat globules are reduced in size to a diameter of 0.6 - 1.3 µm by treating the cream, the treatment being carried out using ultrasound or in a ball mill or in a counterflow in a venturi tube or an atomiser and without the fat globule casings breaking open.

2. Method according to claim 1, characterised in that the cream is treated using ultrasound in the range 10,000 to 50,000 Hz.

3. Method according to claim 1 or 2, characterised in that the cream is treated using ultrasound for a maximum period of 300 seconds.

4. Method according to one of claims 1 to 3, characterised in that the skimmed milk is pasteurised.

5. Method according to one of claims 1 to 4, characterised in that the cheese milk is matured in a cold state for 4-10 hours.

6. Method according to claim 5, characterised in that the cheese milk is matured for 10 hours at 6°C.

7. Method according to claim 5 or 6, characterized in that the matured milk and cream are heated to a temperature of between 28 and 40°C before culturing.

## Revendications

1. Procédé de préparation de fromage avec standardisation, selon lequel on écrème le lait, on traite la crème séparée, ensuite on règle la teneur en matières grasses du lait en cuve à l'aide de la crème traitée et on soumet ce lait à une maturation à froid, puis on le met en culture, on ajoute des additifs, éventuellement de la présure, ensuite, selon le procédé connu, on incorpore la présure et on effectue les opérations de broyage, de chauffage, ainsi que la séparation du petit-lait, le formage, le pressage et le salage, puis la maturation, caractérisé en ce que les perles de graisse sont réduites à un diamètre de 0,6 à 1,3 µm grâce à un traitement de la crème, ce traitement étant effectué avec des ultrasons ou dans un broyeur à boulets ou à contre-courant dans un tube de Venturi ou dans un pulvérisateur, et sans déchirure des enveloppes des perles de graisse.

2. Procédé selon la revendication 1, caractérisé en ce qu'on traite la crème avec des ultrasons de 10 000 à 50 000 Hz.

3. Procédé selon la revendication 1 ou 2, caractérisé en ce qu'on traite la crème avec des ultrasons pendant une durée maximale de 300 secondes.

4. Procédé selon l'une des revendications 1 à 3, caractérisé en ce qu'on pasteurise le lait écrémé.

5. Procédé selon l'une des revendications 1 à 4, caractérisé en ce que le lait destiné à la fabrication du fromage subit une maturation à froid pendant 4 à 10 heures.

6. Procédé selon la revendication 5, caractérisé en ce que le lait destiné à la fabrication du fromage subit une maturation à 6°C pendant 10 heures.

7. Procédé selon la revendication 5 ou 6, caractérisé en ce que le lait après maturation et la crème sont chauffés à une température comprise entre 28 et 40°C avant d'être mis en culture.
